(19) Europäisches Patentamt
European Patent Office
Office européen des brevets

(11) Publication number: **0 344 331 B1**

# EUROPEAN PATENT SPECIFICATION

(45) Date of publication of patent specification: **27.07.94**

(51) Int. Cl.⁵: **B29C 51/26**

(21) Application number: **89900642.3**

(22) Date of filing: **14.12.88**

(86) International application number:
**PCT/JP88/01269**

(87) International publication number:
**WO 89/05722 (29.06.89 89/14)**

(54) **METHOD OF MANUFACTURING DEEP-DRAWN PLASTIC CONTAINER.**

(30) Priority: **15.12.87 JP 315377/87**

(43) Date of publication of application:
**06.12.89 Bulletin 89/49**

(45) Publication of the grant of the patent:
**27.07.94 Bulletin 94/30**

(84) Designated Contracting States:
**DE FR GB**

(56) References cited:
| | |
|---|---|
| JP-A- 591 211 | JP-A- 5 559 920 |
| JP-A- 5 573 515 | JP-A- 55 103 918 |
| US-A- 2 282 423 | US-A- 4 342 183 |

**A. HÖGER: "Warmformen von Kunststoffen", 1st edition, 1971, Carl Hanser Verlag, Munich, DE**

(73) Proprietor: **TOYO SEIKAN KAISHA, LTD.**
**3-1, Uchisaiwai-cho 1-chome**
**Chiyoda-ku**
**Tokyo 100(JP)**

(72) Inventor: **KATO, N Room 703, Sharuman**
**Yokohama Nakayama**
**330-4, Nakayama-cho**
**Midori-ku, Yokohama-shi**
**Kanagawa-ken 226(JP)**
Inventor: **YASUMURO, Hisakazu**
**8-5-404, Isogo**
**Isogo-ku, Yokohama-shi**
**Kanagawa-ken 235(JP)**
Inventor: **TAKENOUCHI, Ken**
**179, Ooguchi Nakamachi**
**Kanagawa-ku**
**Yokohama-shi Kanagawa-ken 221(JP)**

(74) Representative: **Woodcraft, David Charles et al**
**BROOKES & MARTIN**
**High Holborn House**
**52/54 High Holborn**
**London, WC1V 6SE (GB)**

## Description

This invention relates to a process for producing a deep-drawn plastic container. More specifically, it relates to a process for producing a deep-drawn container having uniformity in thickness in the height direction and excellent appearance characteristics from a plastic sheet in the molten state.

As a method of producing a deep-drawn plastic container from a plastic sheet, a plug assist pressure or vacuum forming method using a plug as an assist has previously been known.

The plug assist molding technique is divided into a solid phase sheet molding method which comprises preliminarily heating a plastic sheet to a temperature which is below its melting point but at which it can be stretch-molded, introducing the heated plastic sheet between a molding plug and an open mold, raising the sheet with the molding plug and moving it within the mold, and introducing a pressure fluid between the plug and the sheet, or creating a vacuum between the sheet and the mold, to perform molding on the mold surface; and a molten sheet molding method by which the same molding as above is carried out except that the plastic sheet is heated to a temperature above the melting point of the plastic sheet.

As an example of the former molding method, Japanese Patent Publication No. 23536/1984 describes a method of producing a plastic container which comprises heating a plastic sheet with its end portions fixed by a fixing device such as a chuck to the molding temperature, introducing the sheet between a heated assisting plug disposed within a molding box and a sheet holding plate having a larger opening portion than the opening portion of a female mold and being provided on the peripheral portion of the opening of the female mold, advancing the plug in the direction of the opening of the female mold to draw the sheet, then advancing the sheet holding plate in the direction of the molding box to a height equivalent to the clamped plane of the sheet, drawing the bottom portion of the sheet raised by the projection of the plug with the opening end portion of the holding plate, then advancing the cooled female mold in the direction of the molding box, putting the raised sheet portion thrusted out by the plug into the opening portion of the female mold, compressing the peripheral portion of the sheet with the molding box and the peripheral part of the female mold, immediately then introducing a pressure fluid into the molding box, and molding the sheet on the surface of the female mold and cooling it.

According to the solid phase molding method, molecular orientation is imparted to the side wall portion of the container, and an improvement in strength, transparency and gas-barrier property is expected. On the other hand, the reduction of heat resistance owing to the heat shrinkage of the container wall becomes a problem, and this method cannot at all be applied to the use of preservable containers which require hut filling or retorting.

US 2 282 423 describes a process for producing a container. A sheet or organic plastic material is heated until it is moldable. The sheet is supported initially on poor heating conducting portions of a mold and by clamps. The mold and plug are movable relatively in a closing direction. Differential pressure on opposite sides of the article cause it to conform to the mold cavity.

The greatest problem with the production of a deep-drawn container by the molten sheet molding method is that unlike the case of the solid-phase molding, the molten resin mass has a considerably low tension. Accordingly, the molded container cannot have uniformity in thickness in the height direction, and particularly, of the container tends to become thick in the bottom corner portions and the upper portion in the height direction. Another problem is that when the molten sheet is drawn into the mold cavity, a drag line (a trace of contact) tends to occur in the upper portion of the container in its height direction as a result of contacting of the sheet material with the upper portion of the mold.

The most important point in solving the above problems which arise in the deep-draw molding of the molten sheet depends upon how much molten sheet can be drawn into the mold cavity while minimizing a temperature fall in the sheet. Even if the above-described deep-draw molding methods in the prior art are applied to a molten sheet, the sheet cannot be drawn in a sufficient amount into the mold, and the above problems still remain unsolved.

It is an object of this invention therefore to provide a process by which in the plug assist vacuum and/or pressure forming of a plastic sheet in the molten state, the molten sheet can be drawn in a large amount into the mold cavity while minimizing its temperature fall.

Another object of this invention is to provide a process capable of producing a deep-drawn plastic container which has a uniform thickness distribution in its height direction, excellent appearance characteristics without formation of a drag line in its side wall, and retorting resistance and heatability by an electronic oven.

According to this invention, there is provided a process for producing a deep-drawn container by plug assist vacuum and/or pressure forming of a plastic sheet in the molten state which process comprises moving a plug and a mold relative to each other in a closing direction while the molten sheet is supported on an upper mold surface portion which has heat insulating properties and slipperiness, drawing the molten sheet into the mold while allowing it to slide over the upper surface portion with a positive pressure created in the mold cavity between the mold and the molten sheet, and then after mold clamping, contacting the molten sheet with the mold to cool it.

In the present invention, the upper surface portion of the mold is preferably composed of an annular member having heat insulating property and slipperiness and being positioned diametrically outwardly of, and above, the opening portion of the mold cavity. Furthermore, this annular member is desirably provided such that a tangent contacting the inner circumference of the annular member and the opening portion of the mold cavity is at 20 to 70 degrees to the upper surface of the annular member.

Figure 1 is a view for illustrating the states of the mold, plug and molten sheet in a preparatory stage before molding;

Figure 2 is a view for illustrating the states of the mold, plug and molten sheet in a deep-draw molding state;

Figure 3 is a view showing the states of the mold, plug and container in a vacuum and/or pressure forming stage; and

Figure 4 is an enlarged sectional view showing one example of the sectional structure of the plastic sheet.

In the present invention, the molten plastic sheet is positioned between the plug and the mold, and molded by moving the plug and the mold relative to each another in a closing direction. The marked characteristic is that the relative movement is carried out while the molten sheet is supported on an upper mold surface portion which has heat insulating property and slipperiness, and a positive pressure is created between the mold and the molten sheet, and that the molten sheet is drawn into the mold while the sheet is allowed to slide over the above-mentioned upper mold surface portion.

Supporting of the molten sheet on the upper surface portion of the mold having heat insulating property and slipperiness has a duel function of enabling a positive pressure to be created between the mold and the molten sheet and of maximizing the amount of the molten sheet drawn without a substantial temperature fall.

Firstly, according to this invention, as a result of producing a positive pressure between the mold and the molten sheet, the molten sheet is pressurized toward the plug, and prevented from contacting the mold surface. In particular, when the state of the plug inserted into the mold is observed, it is found that in the molding process of this invention, the height of the molten sheet wrapped about the side wall of the plug is markedly increased. Accordingly, even when the plug is inserted deep into the mold cavity, the molten sheet is effectively prevented from contacting the opening end of the mold. Thus, according to this invention, the occurrence of a drug line in the upper portion of the side wall of the molten container and the deterioration of its appearance characteristics owing to the drag line are prevented. The increase of the wrapping height about the side wall of the plug contributes to an increase in the amount of the molten sheet drawn into the mold.

Secondly, the present invention offers the advantage that the amount of the molten sheet drawn can be maximized because the molten sheet is drawn while sliding over the above-described upper surface mold portion. If the molten sheet is drawn while supporting it by some device, only that part of the sheet which is inwardly of its position restrained by this device is elongated, and it is generally difficult to inwardly draw that part of the molten sheet which is outwardly of the restrained position. According to this invention, the supporting portion has heat insulating property and slipperiness, and by combining this feature with the aforesaid positive pressure creating operation, the molten sheet slides over this supporting portion and is stretched uniformly as a whole. Hence, the amount of the molten resin drawn into the mold can be maximized. Consequently, when a comparison is made between plastic sheets of the same thickness, the unit weight of the container produced in accordance with this invention increases, and the excessive thinning of the side wall portion of the container or the non-uniform distribution of thickness can be effectively prevented.

Molding Process

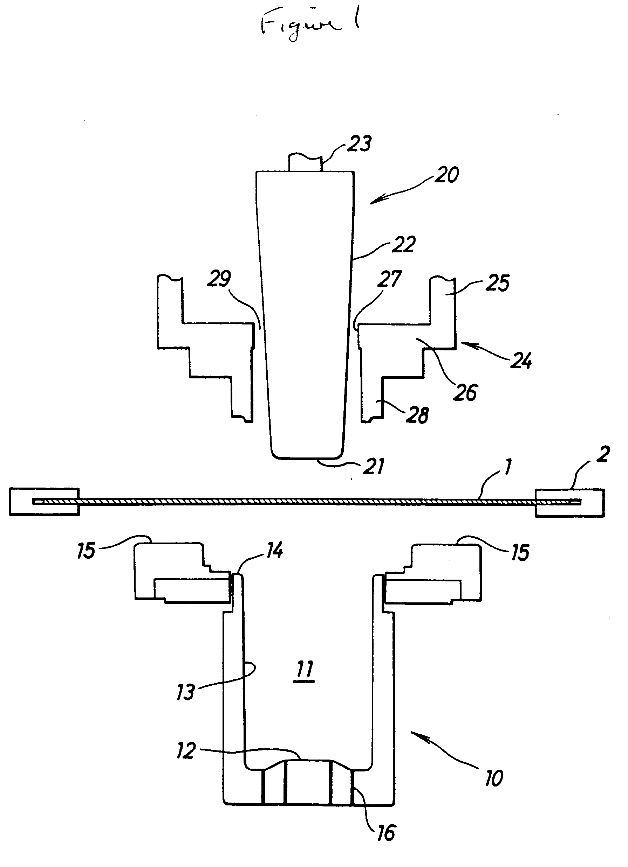

In Figures 1 to 3 for illustrating the molding process of this invention, Figure 1 shows a preparatory stage before molding. In this preparatory stage, a mold shown generally at 10 and a plug shown generally at 20 are in the most spaced-apart relationship. A plastic sheet 1 in the molten state supported by a fixing member 2 such as a chuck is fed between the mold 10 and the plug 20.

The mold 10 has a cavity 11 inside, a bottom wall surface 12 defining the bottom wall of a container to be formed, and a side wall surface 13 defining the side wall of the container. An opening 14 defining an

3

open flange portion of the container is positioned at the upper end of the side wall surface 13. An annular portion 15 having heat insulating property and slipperiness is provided on the uppermost surface of the mold. The mold 10 is provided so that it is free to move in the direction of the height of the side wall portion 13, namely in the vertical direction in the drawing. It is at the lowermost position in Figure 1. At the bottom wall portion of the mold is provided a gas hole 16 for discharging gas from between the wall of the container being molded and the inside surface of the mold, or for maintaining the space under reduced pressure.

The plug 20 has a tip portion 21 to be in engagement with the sheet and a tapered side wall portion 22 for drawing the sheet, and is connected to a driving shaft 23. The plug 20 is also provided movably in the direction of the height of the side wall portion 22, namely in the vertically direction in the drawing, but is at the most elevated position in Figure 1. An upper mold 24 is provided coaxially with the plug 20. The upper mold 24 is comprised of a cylindrical side wall portion 25 and a bottom wall portion 26, and an opening portion 27 through which the plug 20 can pass is formed in the bottom wall portion 26. In the underside of the bottom portion 26 is provided an engaging projecting portion 28 which is adapted to engage the mold opening portion 14 via the plastic sheet and form a flange portion of the container by compression molding, and tightly seals the mold 20 and the upper mold 24. The upper mold 24 is also provided vertically movably, but its ascending and descending movements can be carried out independently from the plug 20. An annular space 29 is formed between the upper mold 24 and the plug when the plug 20 has moved downwardly to the lowest position with respect to the plug 20. The interior of the upper mold 24 is connected to a pressurized gas mechanism, and the pressurized gas can be supplied downwardly via the space 29.

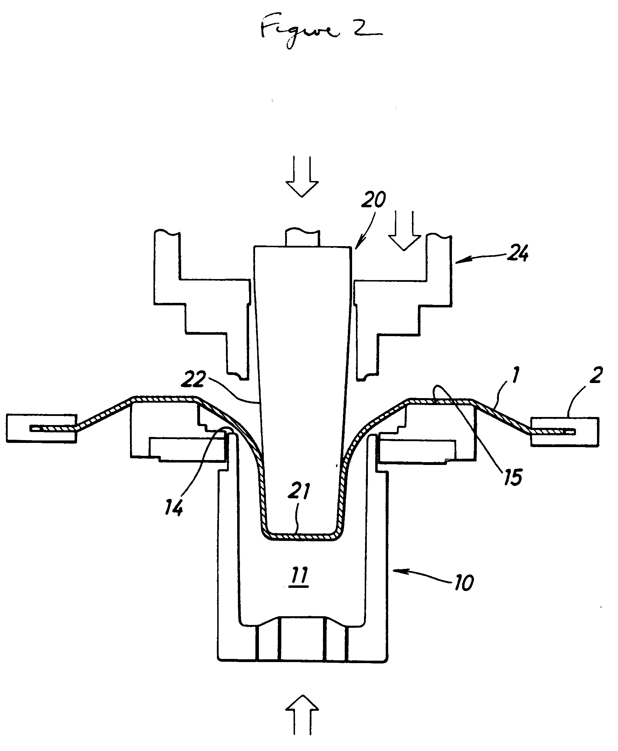

Figure 2 shows the molten plastic sheet being draw-molded. Specifically, from the preparatory stage shown in Figure 1, the mold 10 rises and the plug 20 begins to descend. As a result, the annular portion 15 of the upper surface of the mold engages the undersurface of the molten plastic sheet 1 Since the annular portion 15 is heat-insulating, its engagement with the molten plastic sheet does not substantially cause a temperature fall in the molten plastic. The tip portion 21 of the plug 20 engages the uppersurface of the molten plastic sheet 1 to draw the sheet 1 toward the cavity 11 of the mold. At the time of drawing, the upper surface of the mold is closed by the molten plastic sheet 1 and the sheet 1 is drawn into the cavity. Hence, a positive pressure is produced within the cavity 11. Owing to the descending movement of the plug 20 and the creation of a positive pressure within the mold cavity 11, the molten plastic sheet is wrapped along a large length about the side wall portion 22 of the plug. Owing to the increase of this wrapping length, the contacting of the molten plastic sheet 1 with the mold opening portion 14 is prevented. As the plug 20 and the mold 10 move relative to each other in the closing direction, the molten plastic sheet 1 is drawn effectively into the mold cavity 11. Since the annular member 15 has slipperiness, the molten plastic sheet slides over the annular member 15 of the upper surface of the mold and is at the same time effectively drawn into the cavity 11, as already stated hereinabove.

At the time of drawing the molten sheet, it is also effective to introduce a pressurized gas into the mold from the gas hole 16 and to control the pressure of the mold cavity.

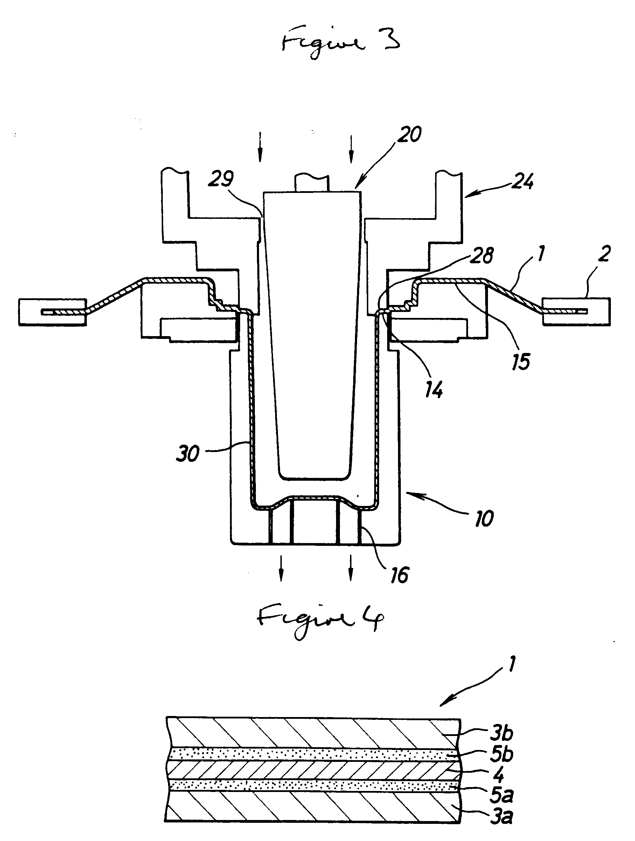

In Figure 3 showing the vacuum and/or pressure forming stage, the plug 20 is inserted deepest in the mold. The upper mold 24 is lowered, and sealing is effected between the sealing engaging portion 28 and the mold opening portion 14 via the plastic sheet. Simultaneously with this, a pressurized gas is blown between the drawn molten plastic sheet 1 and the plug 20 via the space 29 formed between the upper mold 24 and the plug 20, and the mold cavity 11 is maintained vacuum (under reduced pressure) via the gas hole 16. Consequently, the drawn molten plastic sheet is expanded, cooled by contact with the mold surface, and thus molded into a drawn container 30.

### Resin Material

In the present invention, the plastic sheet may be formed of any thermoplastic resin material which can be melt-molded. Examples include olefin resins, styrene resins, vinyl chloride resins, vinylidene chloride resins, polyester resins and polyamide resins. They may be used singly or in combination with each other. Of these, the olefin resins are advantageously used in the molding process of this invention. The olefin resins that can be used comprise olefins as a main structural monomer and are crystalline. Examples are low-, medium-and high-density polyethylene, isotactic polypropylene, crystalline propylene/ethylene copolymer, crystalline ethylene/butene copolymer, crystalline ethylene/propylene/butene copolymer, and blends of these. Ethylene/vinyl acetate copolymer, ethylene/acrylate copolymers and ionically crosslinked olefin copolymers (ionomers) may also be used alone or in combination with other olefin resins so long as they are crystalline. Polypropylene is especially suitable for production of containers which are to be retorted or re-heated.

The olefin resins may be used alone. But from the viewpoint of preservability of contents, it is preferred to use them in combination with oxygen-barrier resins. The oxygen-barrier resins are resins having an oxygen permeation coefficient of not more than $5.5 \times 10^{-12}$ cc. $cm/cm^2 \cdot sec \cdot cm$ Hg ($37 \degree C$, 0 % RH), for example ethylene/vinyl alcohol copolymer, polyamide resins, vinylidene chloride resins and high nitrile resins.

In Figure 4 showing the sectional structure of the plastic sheet suitably used for the purpose of this invention, the sheet 1 has a laminated structure composed of an inside layer 3a and an outside layer 3b of a moisture-resistant thermoplastic resin such as an olefin resin or a styrene resin, an interlayer 4 of the gas-barrier resin, and as required, adhesive layers 5a and 5b provided for firm adhesion between the inside and outside layers and the interlayer. The laminated structure is preferably produced by co-extruding the moisture-resistant thermoplastic resin, the gas-barrier resin and if required, the adhesive resin through a multilayer multiple die into the above multilayer structure. It may of course be produced by other laminating techniques such as sandwich lamination and extrusion coating.

Examples of the adhesive resins that can be used are resins which show adhesion both to the moisture-resistant thermoplastic resin and to the oxygen-barrier resin, such as acid-modified olefin resins (e.g., maleic anhydride graft modified polyethylene and maleic anhydride graft modified polypropylene), ethylene/vinyl acetated copolymer, ethylene/acrylate copolymers, and ionomers. A layer of a scrap resin composition from the sheet (i.e., a composition of the moisture-resistant resin, the oxygen barrier resin and the adhesive resin) may be interposed between the adhesive resin layer and the moisture-resistant thermoplastic resins.

The plastic sheet used in this invention may contain known additives to plastics, for example an antioxidant, a heat stabilizer, an ultraviolet absorber, an antistatic agent, a filler and a coloring agent. For the purpose of opacifying the resulting molded containers, it is possible to incorporate a filler such as calcium carbonate, calcium silicate, alumina, silica, various grades of clay, calcined gypsum, talc and magnesia, or an inorganic or organic pigment such as titanium white, yellow iron oxide, red iron oxide, ultramarine and chromium oxide.

Preferably, the plastic sheet used in this invention has a thickness of generally 0.5 to 5 mm, especially 1 to 3 mm although it may vary depending upon the size of the container, etc. In the above plastic sheet of the laminated structure, the ratio of the thickness ($t_A$) of the inside or outside layer of the moisture-resistant resin to the thickness ($t_B$) of the interlayer of the oxygen-barrier resin is preferably within the following range.

$t_A:t_B$ = 100:1 to 4:1, especially 25:1 to 5:1.

## Molding Conditions

According to this invention, the plastic sheet is first heated to a temperature above its melting or softening point. The heating of the plastic sheet may be effected, for example, by infrared or far infrared ray heating, heating in a hot air oven, or conduction.

That portion of the upper surface of the mold which has heat insulating property and slipperiness is preferably formed from a heat-resistant plastic material having a low coefficient of friction, such as bakelite (novolak phenol resin), polycarbonate and Teflon (polytetrafluoroethylene). On the other hand, the mold is desirably formed from a metallic material having excellent heat conductivity, especially aluminum or an aluminum alloy, so that the wall of the plastic container being molded may be rapidly cooled. The above upper mold surface portion and main body of the mold should be provided integrally in such a relation that the space between them is sealed up. The upper mold surface portion having heat insulating property and slipperiness should be provided above, and diametrically outwardly of, the opening portion of the mold cavity. The angle ($\theta$) of a tangent contacting the inner circumference of this annular portion and the opening portion of the mold with respect to a plane containing this annular portion is desirably 20 to 70 degrees in general, and especially 35 to 45 degrees, from the standpoint of increasing the ratio of the plastic sheet utilized to make the container. If this angel ($\theta$) is less than the above range, a drag line is liable to occur. On the other hand, if it is larger than the above range, the amount of the plastic sheet drawn decreases, and the upper portion of the container is liable to become thin.

The plug may be formed of a material having high heat insulating property, for example, a heat-resistant plastic such as polyoxymethylene resin or polytetrafluoroethylene when no particular heating means is provided. When a heating means is to be built in the plug, the plug may be made of aluminum. Preferably, from the standpoint of molding operability, the outside diameter ($D_P$) of the plug tip is in the range of 35 to 80 %, especially 60 to 70 %, of the inside diameter ($D_M$) of the opening portion of the mold.

Desirably, the tapering angle ($\alpha$) of the tapered side surface of the plug is in the range of 0.5 to 10 degrees, especially 2 to 6 degrees, in order to increase the wrapping height of the plastic sheet about the side surface. A curvature portion provided between the tip of the plug and the tapered side surface preferably has a radius (R) of generally 1 to 25 mm, especially 3 to 10 mm. If R is larger than the above range, the bottom and corners of the container tend to become thin. If it is smaller than the above range, the bottom of the container tends to become thick. Desirably, the positive pressure (P) to be created in the space between the mold and the molten sheet is generally 0.02 to 0.5 kg/cm$^2$-G, especially 0.06 to 0.2 kg/cm$^2$-G. If this pressure (P) is lower than the above range, a drag line is liable to form. If it is higher than the above range, the resulting container wall tends to become thin. This pressure may be adjusted by controlling escape of air from the bottom of the mold at the time of drawing, or by adjusting the speed of relative molding of the plug to the mold cavity, or by introducing a pressurized gas into the mold cavity from the gas hole at the bottom.

In the present invention, the plug pushing rate defined by the equation to be given below is desirably 70 to 98 % in general, and especially 90 to 98 %. Preferably, the plug volume ratio is 25 to 80 %, especially 40 to 60 %. According to this invention, it is noteworthy that the sheet drawing rate defined by the following equation can be adjusted to as high as 2.4 to 3.6, especially 2.7 to 3.3.

Expansion of the drawn molten sheet in the mold can be easily effected by evacuating the space between the sheet and the mold surface, introducing a pressurized gas into between the plug and the sheet, or a combination of these operations. Generally, it is advantageous to use compressed air under 1 to 5 kg/cm$^2$. Advantageously, the temperature of the mold surface is generally 5 to 40 °C.

The present invention is useful for production of containers having a height/diameter rato of at least about 0.8, especially 1.0 to 1.7.

According to this invention, by employing the means described above, the amount of the molten plastic sheet drawn into the mold can be increased, and there can be produced containers which have a uniform thickness distribution in the height direction and good appearance characteristics without the occurrence of a drag line on their side wall. The present invention markedly increases the ratio of the plastic sheet utilized for production of a deep-drawn container, and also greatly improves molding operability.

Furthermore, since this container is formed by the molten sheet molding technique, it has excellent hot water resistance (heat distortion resistance) and can be sterilized by, for example, retorting and its contents can be heated or warmed in an electronic oven. Moreover, the provision of the oxygen-barrier layer imparts excellent preservability. Thus, the invention has many advantages.

EXAMPLES

In the following Examples, the containers were evaluated by the following methods, and characteristic values are as defined below.

(Methods of evaluating the containers)

(1) Appearance

The molded containers were macroscopically observed for injuries, depressions, etc. (n = 24)

(2) Thickness distribution

Measured by a micrometer (average value on n = 5)

(3) Container deformation

The containers were macroscopically observed for the presence or absence of perceptible deformations when they were filled with contents and after retorting.
(n = 24)

(4) Volume shrinkage

$$\text{Volume shrinkage} = \frac{(\text{Inner capacity before filling}) - (\text{inner capacity after retorting})}{\text{Inner capacity before filling}} \times 100 (\%)$$

$$(\text{average value on } n=12)$$

(5) Falling strength

Filled containers after retorting were cooled to 5°C, maintained upstanding, upside down, or wideways, and let fall twice onto a concrete surface. The number of broken containers was examined.
(n = 10 for each falling direction)

Definitions of coefficients:

$$\text{Plug pushing rate} = \frac{\text{Plug pushing depth}}{\text{Mold depth}} \times 100 (\%)$$

$$\text{Plug volume ratio} = \frac{\text{Volume of the plug within the mold}}{\text{Volume of the mold}} \times 100 (\%)$$

$$\text{Sheet drawing rate} = \frac{\text{Area of the sheet corresponding to the unit weight of the container}}{\text{Projected area as seen from the upper surface of the container (excluding the flange portion)}}$$

Example 1

A flange-equipped round container (inner capacity about 315 ml) having an outside diameter of ⌀ 66, a height of 102 mm and a flange diameter of ⌀ 75 was produced by the process of this invention by using a vacuum-pressure forming machine from a multilayer sheet having a total thickness of 2 mm and composed of polypropylene (MI = 0.5)/adhesive (vinyl acetate/alcohol copolymer)/gas-barrier resin (Saran "PVDC")-/adhesive (vinyl acetate/alcohol copolymer)/polypropylene (MI = 0.5) which was produced by ordinary coextrusion sheet molding.

A Bakelite annular member having an opening diameter of ⌀ 100, an outside diameter of ⌀ 180 and an opening height of 15 mm was provided in intimate contact on the upper surface of an aluminum mold (opening diameter ⌀ 68 mm, depth 103 mm). Then angle (θ) of the tangent contacting the inner circumference of the annular member and the opening portion of the mold with respect to the upper surface of the annular member was 40 degrees. An aluminum plug having a tip outside diameter of ⌀ 45 was used, and in order to prevent temperature fall of the molten sheet, had a heater built therein. The plug was controlled to about 140°C.

The end portions of the sheet (200 mm x 20 mm) were fixed by a clamp, and heated to a temperature (180 - 190°C) above its melting point from above and below by in far infrared heaters in the heating step. Then, it was transferred to the molding step. First, the mold equipped with the annular member on its upper surface rose from below the sheet. The annular member contacted the sheet and pushed it up. Simultaneously with it, or with some delay, the plug was pushed into the opening portion of the annular member from above. While the molten sheet was allowed to slide over the annular member, the surrounding sheet was pulled in, and at this time, a positive pressure was created in the space between the sheet and the mold. The pressure measured was 0.12 kg/cm$^2$. This positive pressure pushed the sheet to the plug, and its wrapping was accelerated. As a result, the molten sheet was drawn with a uniform thickness, and its contacting with the mouth portion of the cooled mold was prevented. The sheet drawing rate at this time was 3.0; the plug pushing rate, 95 %; and the plug volume ratio, 55 %. After the sheet was drawn into the mold, the sheet wash held by a flange ring and the flange portion of the mold to maintain the space between the sheet and the mold vacuum. With some delay, compressed air (2 kg/cm$^2$) was introduced into between the plug and the sheet. The sheet was transferred from the plug to the mold and cooled. Thus, the molding was completed.

The appearance of the container molded by the above method was observed and its thickness distribution was measured. Its appearance was good without injury, and its thickness distribution was uniform both in the height direction and in the circumferential direction.

Meat sauce was filled at 80 to 85°C into the container (head space: 5 mm). A closure material composed of PET/aluminum/PP was applied to the container by heat sealing. The filled container was then subjected to equal pressure retorting treatment at 115°C for 40 minutes (come up 25 minutes). After retorting, the container was examined for the state of deformation, the volume shrinkage and the falling strength. The results are shown in Table 1.

The results given in Table 1 clearly show that the deep-drawn container obtained by the process of this invention had a uniform thickness distribution both in the height direction and in the circumferential direction, did not undergo abnormal deformation even by retorting, and had sufficient strength; and that it was very good as a retortable container.

## Example 2

In the same way as in Example 1, the multilayer sheet was heat-melted, and then in the molding step, wrapping of the sheet about the plug was promoted further. In order to increase the sheet drawing rate, the molten sheet was drawn into the mold and molded while air was fed from a vacuum hole into the mold. At this time, the pressure inside the mold was 0.2 kg/cm$^2$, and the sheet drawing rate was 3.2.

The container obtained by the above method was evaluated as in Example 1. The results are shown in Table 1.

The results given in Table 1 clearly show that a deep-drawn container having a better thickness distribution could be molded by controlling the pressure in the mold.

## Example 3

As in Example 1, the multilayer sheet was heat-melted, and then an annular member of Teflon resin having an opening diameter of ⌀ 80, an outside diameter of ⌀ 180 and an opening height of 4 mm was used. Otherwise, by the same method as in Example 1, a deep-drawn container was formed.

At this time, the pressure inside the mold was 0.13 kg/cm$^2$, and the sheet drawing rate was 3.0.

The container obtained by the above method was evaluated as in Example 1, and the results are shown in Table 1.

The results given in Table 1 clearly show that the container obtained by deep-draw molding by the process of this invention had a uniform thickness distribution and excellent properties after retorting.

## Comparative Example 1

In the apparatus shown in Figure 1, the bottom of the mold (10) was formed in such a structure that it could be vertically moved (not particularly shown) for easy releasing of the container from the mold after molding. Otherwise, the molding was carried out in the same way as in Example 1.

By this method, air-tightness could not be maintained in the movable part of the mold at the time of pulling the molten sheet into the mold by the plug. Hence, no pressure was produced within the mold.

The appearance of the container obtained by the above method was such that many traces of contact with the mouth portion of the mold were seen, and the thickness in the height direction was very non-uniform. As in Example 1, the container was filled, retorted and then evaluated. The results are shown in Table 1. There was great deformation owing to the retorting, and the falling strength of the container was not satisfactory.

Comparative Example 2

In the same way as in Example 1, the multilayer sheet was heat-melted, and then in the molding step, the molten sheet was held by the flange and molded by lowering the plug and drawing the sheet into the mold instead of allowing it to slide over the upper surface of the mold. The barrel portion of the container was broken.

Table 1

| | Pressure in the mold (kg/cm$^2$) | Sheet drawing rate | Shape of the annular member (θ°) | Shape of the plug (volume ratio %) | Evaluation (before retorting) | | Evaluation (after retorting) | | |
|---|---|---|---|---|---|---|---|---|---|
| | | | | | Appearance | Thickness distribution (unit weight) | Container deformation | Volume shrinkage (%) | Falling strength (number of broken containers) |
| Ex. 1 | 0.12 | 3.0 | 40° | 55 | good | good (19 g) | none | 0.5 | 0/30 |
| Ex. 2 | 0.20 | 3.2 | 40° | 55 | good | good (20 g) | none | 0.3 | 0/30 |
| Ex. 3 | 0.13 | 3.0 | 33° | 55 | good | good (19 g) | none | 0.5 | 0/30 |
| Comp. Ex. 1 | 0 | 2.1 | 40° | 55 | many injuries | very non-uniform (13 g) | great deformation in a portion having a non-uniform thickness | 3.5 | 18/30 |
| Comp. Ex. 2 | 0 | – | 40° | 55 | ———— Barrel portion broken ———— | | | | |

Ex. : Example,　　Comp. Ex.: Comparative Example

Claims

1. A process for producing a deep-drawn container (30) by plug assist vacuum and/or pressure forming of a plastic sheet (1) in the molten state which process comprises moving a plug (20) and a mold (10) relative to each other in a closing direction while the molten sheet (1) is supported on an upper mold

10

surface portion which has heat insulating properties and slipperiness, drawing the molten sheet (1) into the mold (10) while allowing it to slide over the upper surface portion with a positive pressure created in the mold cavity (11) between the mold (10) and the molten sheet (1), and then after mold clamping, contacting the molten sheet with the mold to cool it.

2. The process of claim 1 in which the upper surface portion of the mold is composed of an annular member (15) having heat insulating property and slipperiness which is positioned above, and diametrically outwardly of, the opening portion of the mold cavity (10).

3. The process of claim 2 in which the annular member (25) is provided so that a tangent contacting the inner circumference and the opening portion of the mold cavity forms an angle (8) of 20 to 70 degrees with respect to the upper surface of the annular member (15).

4. The process of claim 1 in which the pressure of the space between the mold (10) and the molten sheet (1) is controlled to 0.02 to 0.50 kg.cm$^2$ (gauge).

5. The process of claim 1 in which the outside diameter (Dp) of the plug tip (21) is 36 to 80 % of the opening diameter (Dm) of the mold cavity.

6. The process of claim 1 in which the molding is carried out so that the plug volume ratio defined by the following equation:

$$\text{Plug volume ratio} = \frac{\underline{\text{Plug volume in the mold}}}{\text{Mold volume}} \times 100$$

is 25 to 80 %.

7. The process of claim 1 in which the plastic sheet is composed of a laminated structure of propylene resin/oxygen-barrier resin/propylene resin.

**Patentansprüche**

1. Verfahren zur Herstellung eines tiefgezogenen Behälters (30) durch Patrizen-unterstütztes Vakuum- und/oder Druckformen einer Kunststoffolie (1) im geschmolzenen Zustand, wobei das Verfahren das Bewegen einer Patrize (20) und einer Form (10) relativ zueinander in Schließrichtung, während die geschmolzene Folie (1) von einem oberen Formoberflächenabschnitt abgestützt wird, der wärmeisolierende Eigenschaften und ein Gleitvermögen aufweist, das Ziehen der geschmolzenen Folie (1) in die Form (10), während man sie über den oberen Oberflächenabschnitt mit einem Überdruck, der in der Formhöhlung (11) zwischen der Form (10) und der geschmolzenen Folie (1) erzeugt wird, gleiten läßt, und anschließend nach dem Schließen der Form, das Kontaktieren der geschmolzenen Folie mit der Form, um sie zu kühlen, umfaßt.

2. Verfahren nach Anspruch 1, wobei der obere Oberflächenabschnitt der Form aus einem ringförmigen Element (15) mit wärmeisolierenden Eigenschaften und einem Gleitvermögen besteht, das oberhalb und diametral nach außen gerichtet vom Öffnungsabschnitt der Formhöhlung (10) angeordnet ist.

3. Verfahren nach Anspruch 2, wobei das ringförmige Element (25) bereitgestellt wird, so daß eine Tangente in Kontakt mit dem inneren Umfang und dem Öffnungsabschnitt der Formhöhlung einen Winkel ($\theta$) von 20 bis 70° im Hinblick auf die obere Oberfläche des ringförmigen Elements (15) bildet.

4. Verfahren nach Anspruch 1, wobei der Druck im Raum zwischen der Form (10) und der geschmolzenen Folie (1) auf 0,02 bis 0,50 kg•cm$^2$ (Überdruck) eingestellt wird.

5. Verfahren nach Anspruch 1, wobei der Außendurchmesser (Dp) der Patrizenspitze (21) 36 bis 80 % des Öffnungsdurchmessers (Dm) der Formhöhlung ausmacht.

**6.** Verfahren nach Anspruch 1, wobei das Formen so durchgeführt wird, daß das Patrizenvolumenverhältnis, das durch folgende Gleichung definiert ist:

$$\text{Patrizenvolumenverhältnis} = \frac{\text{Patrizenvolumen in der Form}}{\text{Formvolumen}} \times 100$$

25 bis 80 % beträgt.

**7.** Verfahren nach Anspruch 1, wobei die Kunststoffolie aus einer laminierten Struktur aus Propylenharz/Sauerstoffbarriere-Harz/Propylenharz besteht.

**Revendications**

**1.** Procédé de fabrication d'un récipient (30) à emboutissage profond, par formation sous vide et/ou sous pression, à l'aide d'un poinçon, d'une feuille (1) en matière plastique se trouvant à l'état de fusion, procédé dans lequel on déplace un poinçon (20) et un moule (10) l'un par rapport à l'autre, dans une direction de fermeture, tandis que la feuille en fusion (1) est supportée sur une partie surface supérieure de moule qui possède des propriétés d'isolation thermique et une aptitude au glissement, on étire la feuille en fusion (1) dans le moule (10), tout en lui permettant de glisser sur la partie surface supérieure, tandis que l'on applique une pression positive dans la cavité de moule (11), entre le moule (10) et la feuille en fusion (1) et, ensuite, après avoir serré le moule, on met en contact la feuille en fusion avec le moule afin de la refroidir.

**2.** Procédé selon la revendication 1, dans lequel la partie surface supérieure du moule est constituée d'un organe annulaire (15) possédant une propriété d'isolation thermique et une aptitude au glissement, qui est disposé au-dessus, et diamétralement vers l'extérieur, de la partie ouverture de la cavité de moule (10).

**3.** Procédé selon la revendication 2, dans lequel l'organe annulaire (25) est prévu de manière qu'une tangente en contact avec la circonférence intérieure et la partie ouverture de la cavité de moule forment un angle (8) de 20 à 70 degrés par rapport à la surface supérieure de l'organe annulaire (15).

**4.** Procédé selon la revendication 1, dans lequel la pression effective de l'espace entre le moule (10) et la feuille en fusion (1) est commandée de 0,02 à 0,50 kg.cm$^2$.

**5.** Procédé selon la revendication 1, dans lequel le diamètre extérieur (Dp) de l'embout de poinçon (21) représente 36 à 80 % du diamètre d'ouverture (Dm) de la cavité de moule.

**6.** Procédé selon la revendication 1, dans lequel le moulage est effectué de manière que le rapport du volume de poinçon défini par l'équation qui suit :

$$\text{Rapport de volume de poinçon} = \frac{\text{Volume du poinçon dans le moule}}{\text{Volume du moule}} \times 100$$

soit de 25 à 80 %.

**7.** Procédé selon la revendication 1, dans lequel la feuille en matière plastique est composée d'une structure stratifiée de résine de propylène/résine formant barrière contre l'oxygène/résine de propylène.

Figure 1

Figure 2

Figure 3

Figure 4